# EUROPÄISCHE PATENTSCHRIFT

(11) **EP 3 178 731 B1**
(45) Veröffentlichungstag und Bekanntmachung des Hinweises auf die Patenterteilung: **01.07.2020**
(21) Anmeldenummer: 16203498.7
(22) Anmeldetag: 12.12.2016
(51) Int. Cl.: B62J 15/00

(54) **RADSCHÜTZER FÜR DAS VORDERRAD EINES ZWEIRADES**
WHEEL PROTECTOR FOR THE FRONT WHEEL OF A TWO-WHEELED VEHICLE
GARDE-BOUE POUR LA ROUE AVANT D'UN DEUX ROUES

(30) Priorität: 10.12.2015 DE 102015121558
(43) Veröffentlichungstag der Anmeldung: 14.06.2017
(73) Patentinhaber: SKS metaplast Scheffer-Klute GmbH, 59846 Sundern (DE)
(72) Erfinder: Kordes, Sven, 59846 Sundern (DE)
(74) Vertreter: Basfeld, Rainer

(56) Entgegenhaltungen:
- CN-Y- 2 628 393
- DE-U1- 20 307 465
- DE-U1- 29 504 937
- FR-E- 52 623

## Beschreibung

Die vorliegende Erfindung betrifft einen Radschützer für das Vorderrad eines Zweirades gemäß dem Oberbegriff des Anspruchs 1.

Ein Radschützer der vorgenannten Art ist aus der DE 203 07 465 U1 bekannt. Der darin beschriebenen Vorderradschützer umfasst Klemmmittel, die in das Innere einer Vorderradgabel eingebracht und aufgespreizt werden können. Diese Klemmmittel sind mit einem vorderen Spritzschutzteil verbindbar, das einen vorderen torusförmigen Abschnitt und einen hinteren L-förmigen Abschnitt aufweist. An dem hinteren Ende des L-förmigen Abschnitts ist ein aus mehreren Segmenten bestehendes hinteres Spritzschutzteil angebracht. Die Verbindung der beiden Spritzschutzteile erlaubt mehrere unterschiedliche Winkel zwischen den Spritzschutzteilen. Dazu liegen Verbindungsteile aneinander an, die jeweils ineinander greifende Verzahnungen aufweisen. Durch Verdrehen der Verzahnungen zueinander kann der Winkel, den das hintere Spritzschutzteil mit der Horizontalen einschließt in Abstufungen verändert werden. Auf die gleiche Art und Weise sind die Segmente des zweiten Spritzschutzteils miteinander verbunden, so dass auch die Winkel, die die einzelnen Segmente des hinteren Spritzschutzteils mit der Horizontalen einschließen, in Abstufungen verändert werden können.

Als nachteilig dabei ist die Segmentierung anzusehen, die eine aufwändige Fertigung und eine komplizierte Bedienung nach sich zieht. Dies insbesondere deshalb, weil durch die lediglich in Stufen verstellbare Richtung zwischen erstem und zweitem Spritzschutzteil eine Verstellung der vordersten Verbindung zu unpräzise ist, wenn die genaue Lage des hintersten Endes des zweiten Spritzschutzteils an lokale Gegebenheiten eines Zweirads angepasst werden soll. Insbesondere bei Mountainbikes mit einfedernden Vorderradgabeln muss darauf geachtet werden, dass das hintere Ende des Radschützers einen ausreichenden Abstand sowohl zu dem Unterrohr, als auch zu dem Reifen des Fahrrads einhält. Eine in vertikaler Richtung genaue Positionierung des hinteren Endes ist also wünschenswert. Diese lässt sich bei dem vorgenannten Radschützer aufgrund der ineinander greifende Verzahnungen der Verbindung allenfalls dadurch erreichen, dass sämtliche Verbindungen zwischen den Segmenten des hinteren Spritzschutzteils einzeln optimiert werden. Dies ist mit beträchtlichem Aufwand verbunden.

Das der vorliegenden Erfindung zugrunde liegende Problem ist die Schaffung eines Radschützers der eingangs genannten Art, bei dem eine vergleichsweise genaue Positionierung des hinteren Endes des Radschützers einfacher realisierbar ist.

Dies wird durch einen Radschützer der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass das zweite Spritzschutzteil nicht segmentiert ist, wobei das zweite Spritzschutzteil lediglich eine Verstellmöglichkeit der Richtung, in der sich das zweite Spritzschutzteil im verbundenen Zustand von dem ersten Spritzschutzteil wegerstreckt, aufweist, wobei diese Verstellmöglichkeit durch die Verbindungsmittel im in Einbaulage vorderen Bereich des zweiten Spritzschutzteils realisiert ist und zur Positionierung des hinteren Endes des nicht segmentierten zweiten Spritzschutzteils dient. Das zweite Spritzschutzteil weist insbesondere nur einen, sich über die gesamte Länge des Spritzschutzteils erstreckenden Spritzschutzabschnitt auf, der beispielsweise torusförmig sein kann. Das hintere Ende eines nicht segmentierten Spritzschutzteils kann einfacher positioniert werden.

Es kann vorgesehen sein, dass die Verbindungsmittel derart gestaltet sind, dass die Richtung, in der sich das zweite Spritzschutzteil im verbundenen Zustand von dem ersten Spritzschutzteil wegerstreckt, stufenlos verstellbar ist. Durch die stufenlose Verstellbarkeit kann der Winkel, den das zweite Spritzschutzteil im montierten Zustand im Bereich der Verbindungsmittel mit der horizontalen Richtung einschließt, stufenlos geändert werden, so dass auch die genaue Position des hinteren Endes des zweiten Spritzschutzteils vergleichsweise genau eingestellt werden kann.

Die stufenlose Verstellbarkeit kann dazu beitragen, dass auf die Segmentierung des zweiten Spritzschutzteils verzichtet werden kann. Es kann also einen sich über die gesamte Länge des Spritzschutzteils erstreckenden Spritzschutzabschnitt aufweisen, der beispielsweise torusförmig sein kann.

Es kann vorgesehen sein, dass das zweite Spritzschutzteil eine Länge von mehr als 10 cm, insbesondere eine Länge von mehr als 20 cm, beispielsweise eine Länge von etwa 30 cm aufweist. Trotz dieser Länge kann durch die Verstellung der beispielsweise am vorderen Ende des zweiten Spritzschutzteils angeordneten Verbindung das hintere Ende des zweiten Spritzschutzteils in vertikaler Richtung präzise in vertikaler Richtung positioniert werden.

Es besteht die Möglichkeit, dass die Verbindungsmittel derart gestaltet sind, dass die Verbindung eine kraftschlüssige Verbindung ist oder eine kraftschlüssige Verbindung umfasst. Im Gegensatz zu der formschlüssigen Verbindung, die durch die ineinander greifenden Verzahnungen realisiert wird, ermöglicht die kraftschlüssige Verbindung eine stufenlose Verstellung.

Es kann vorgesehen sein, dass die Verbindungsmittel mindestens zwei Verbindungsteile umfassen, die aneinander pressbar sind, um die Verbindung zu realisieren oder zu der Verbindung beizutragen, insbesondere wobei die mindestens zwei Verbindungsteile zumindest teilweise aus einem, vorzugsweise mit Glasfasern, verstärkten Kunststoff oder aus Metall, vorzugsweise aus Aluminium, bestehen oder einen, vorzugsweise mit Glasfasern, verstärkten Kunststoff oder Metall, vorzugsweise Aluminium umfassen. Beispielsweise können die mindestens zwei Verbindungsteile im verbundenen Zustand in Querrichtung des Radschützers aneinander gepresst werden, wobei die aneinander gepressten Oberflächen der Verbindungsteile insbesondere unstrukturiert sind. Die unstrukturierten Oberflächen können um beliebige Winkel oder Bruchteile von Winkeln gegeneinander verdreht und wieder aneinander gepresst werden.

Es besteht die Möglichkeit, dass die Verbindungsmittel mindestens eine Hülse umfassen, durch die sich eine Schraube erstrecken kann, wobei insbesondere die mindestens eine Hülse zumindest teilweise aus einem, vorzugsweise mit Glasfasern, verstärkten Kunststoff oder aus Metall, vorzugsweise aus Aluminium, besteht oder einen, vorzugsweise mit Glasfasern, verstärkten Kunststoff oder Metall, vorzugsweise Aluminium umfasst. Beispielsweise kann die mindestens eine Hülse eines der Verbindungsteile sein oder es kann ein jedes der Verbindungsteile als Hülse ausgebildet sein.

Es besteht die Möglichkeit, dass mindestens eine Schraube im verbundenen Zustand durch ein in Querrichtung des Radschützers außen angeordnetes Verbindungsteil, das vorzugsweise als Hülse ausgebildet ist, in ein in Querrichtung des Radschützers innen angeordnetes Verbindungsteil, das vorzugsweise als Hülse, insbesondere als Gewindehülse, ausgebildet ist, hineinragt. Durch Lösen und Festziehen der mindestens einen Schraube lassen sich die Verbindungsteile mit einfachen Mitteln voneinander lösen und aneinander festlegen.

Es kann vorgesehen sein, dass an dem zweiten Spritzschutzteil mindestens eines der Verbindungsteile, vorzugsweise mindestens eine der Hülsen, angeordnet ist, insbesondere dass an dem zweiten Spritzschutzteil zwei Verbindungsteile, vorzugsweise zwei Hülsen angeordnet sind.

Es kann weiterhin vorgesehen sein, dass an dem ersten Spritzschutzteil oder an dem Zwischenstück mindestens eines der Verbindungsteile, vorzugsweise mindestens eine der Hülsen, angeordnet ist, insbesondere dass an dem ersten Spritzschutzteil oder an dem Zwischenstück zwei Verbindungsteile, vorzugsweise zwei Hülsen angeordnet sind.

Es besteht beispielsweise die Möglichkeit, dass an dem zweiten Spritzschutzteil zwei Verbindungsteile in Querrichtung des Radschützers gegenüberliegend außen angeordnet sind und dass an dem ersten Spritzschutzteil oder an dem Zwischenstück ein Verbindungsteil in Querrichtung des Radschützers innen angeordnet ist, so dass im verbundenen Zustand die beiden Verbindungsteile des zweiten Spritzschutzteils beidseitig von außen an dem Verbindungsteil des ersten Spritzschutzteils oder des Zwischenstücks anliegen, oder es besteht die Möglichkeit, dass an dem ersten Spritzschutzteil oder an dem Zwischenstück zwei Verbindungsteile in Querrichtung des Radschützers gegenüberliegend außen angeordnet sind und dass an dem zweiten Spritzschutzteil ein Verbindungsteil in Querrichtung des Radschützers innen angeordnet ist, so dass im verbundenen Zustand die beiden Verbindungsteile des ersten Spritzschutzteils oder des Zwischenstücks beidseitig von außen an dem Verbindungsteil des zweiten Spritzschutzteils anliegen.

Es kann vorgesehen sein, dass die mindestens zwei Verbindungsteile in mindestens eine Aufnahme an dem zweiten Spritzschutzteil beziehungsweise mindestens eine Aufnahme an dem ersten Spritzschutzteil oder an dem Zwischenstück eingebracht sind, wobei insbesondere die Verbindungsteile äußere Strukturierungen wie eine Sechskantform aufweisen, um ein Verdrehen in den Aufnahmen zu verhindern. Auf diese Weisen lässt sich die Fertigung des Radschützers vereinfachen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Explosionsansicht einer ersten Ausführungsform eines erfindungsgemäßen Radschützers;
- Fig. 2: eine Draufsicht auf den Radschützer gemäß Fig. 1;
- Fig. 3: einen Schnitt gemäß den Pfeilen III - III in Fig. 2;
- Fig. 4: einen Schnitt gemäß den Pfeilen IV - IV in Fig. 3;
- Fig. 5: eine perspektivische Ansicht auf eine Anordnung des Radschützers gemäß Fig. 1 an einer Vorderradgabel eines Fahrrads in einem teilweise montierten Zustand des Radschützers;
- Fig. 6: eine Fig. 5 entsprechende Ansicht der Anordnung in einem vollständig montierten Zustand des Radschützers;
- Fig. 7: eine Draufsicht auf die Anordnung gemäß Fig. 5; in einem vollständig montierten Zustand des Radschützers
- Fig. 8: einen Schnitt gemäß den Pfeilen VIII - VIII in Fig. 7;
- Fig. 9: eine Seitenansicht der Anordnung gemäß Fig. 5 in einer ersten Stellung des hinteren Spritzschutzteils;
- Fig. 10: eine Fig. 9 entsprechende Seitenansicht der Anordnung in einer zweiten Stellung des hinteren Spritzschutzteils;
- Fig. 11: eine Seitenansicht einer Anordnung des Radschützers gemäß Fig. 1 an einer Vorderradgabel eines Fahrrads mit einer vorderen Gabelbrücke in einem nicht eingefederten Zustand der Vorderradgabel;
- Fig. 12: eine Seitenansicht einer Anordnung des Radschützers gemäß Fig. 1 an einer Vorderradgabel eines Fahrrads mit einer hinteren Gabelbrücke in einem nicht eingefederten Zustand der Vorderradgabel;
- Fig. 13: eine Seitenansicht einer Anordnung des Radschützers gemäß Fig. 1 an einer Vorderradgabel eines Fahrrads mit einer vorderen und einer hinteren Gabelbrücke in einem nicht eingefederten Zustand der Vorderradgabel;
- Fig. 14: eine Schnittansicht durch die Anordnung gemäß Fig. 13 in einem eingefederten Zustand der Vorderradgabel;
- Fig. 15: eine Seitenansicht einer Anordnung des Radschützers gemäß Fig. 1 an einer Vorderradgabel eines Fahrrads mit einer hinteren Gabelbrücke, wobei das Fahrrad eine erste Ausführungsform eines Rahmens aufweist;
- Fig. 16: eine Seitenansicht einer Anordnung des Radschützers gemäß Fig. 1 an einer Vorderradgabel eines Fahrrads mit einer hinteren Gabelbrücke, wobei das Fahrrad eine zweite Ausführungsform eines Rahmens aufweist;
- Fig. 17: eine Explosionsansicht einer zweiten Ausführungsform eines erfindungsgemäßen Radschützers;
- Fig. 18: eine perspektivische Ansicht des Radschützers gemäß Fig. 17;
- Fig. 19: eine Draufsicht auf den Radschützer gemäß Fig. 17;
- Fig. 20: einen Schnitt gemäß den Pfeilen XX - XX in Fig. 19;
- Fig. 21: einen Schnitt gemäß den Pfeilen XXI - XXI in Fig. 20;
- Fig. 22: eine perspektivische Ansicht auf eine Anordnung des Radschützers gemäß Fig. 17 an einer Vorderradgabel eines Fahrrads in einem montierten Zustand des Radschützers;
- Fig. 23: einen Schnitt durch die Anordnung gemäß Fig. 22;
- Fig. 24: eine Seitenansicht der Anordnung gemäß Fig. 22 in einer ersten Stellung des hinteren Spritzschutzteils;

Fig. 25 eine Fig. 24 entsprechende Seitenansicht der Anordnung in einer zweiten Stellung des hinteren Spritzschutzteils. In den Figuren werden gleiche oder funktional gleich Teile mit gleichen Bezugszeichen versehen.

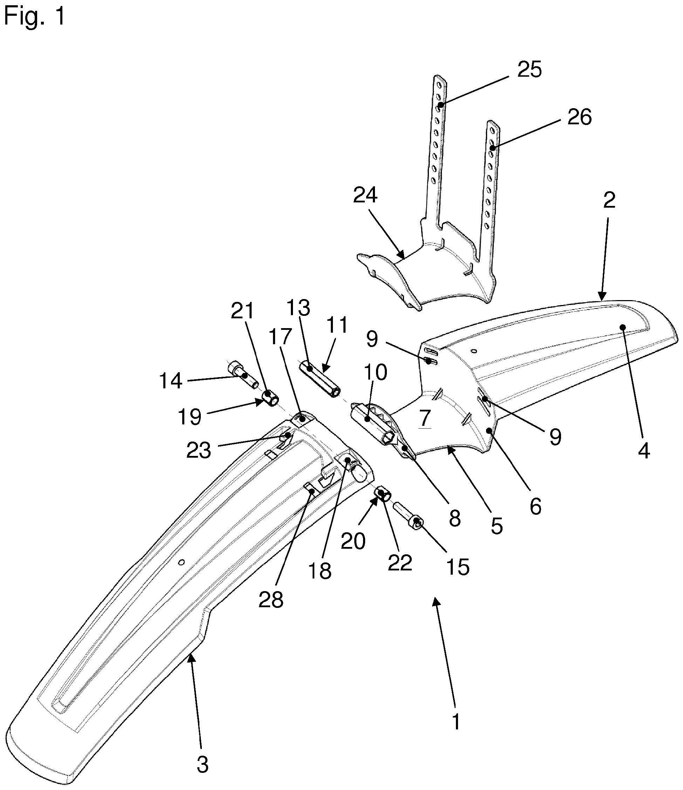

Die in Fig. 1 bis Fig. 16 abgebildete erste Ausführungsform eines Radschützers 1 umfasst ein erstes, im montierten Zustand vorderes Spritzschutzteil 2 und ein zweites, im montierten Zustand hinteres Spritzschutzteil 3. Die Spritzschutzteile 2, 3 sind langgestreckt und leicht torusförmig ausgebildet, so dass sie sich im montierten Zustand zumindest abschnittsweise längs des Umfangs des Vorderrades des Zweirades erstrecken.

Das erste Spritzschutzteil 2 weist einen vorderen torusförmigen Abschnitt 4 und einen hinteren U-förmigen Abschnitt 5 auf.

Es besteht alternativ die Möglichkeit, den U-förmigen Abschnitt 5 getrennt von dem vorderen torusförmigen Abschnitt 4 auszubilden, so dass der U-förmige Abschnitt 5 als Zwischenstück dient, das mit dem ersten und dem zweiten Spritzschutzteil 2, 3 verbunden ist.

Der hintere U-förmige Abschnitt 5 des ersten Spritzschutzteils 2 weist einen vorderen U-Schenkel 6, einen Boden 7 und einen hinteren U-Schenkel 8 auf. Im oberen Bereich des vorderen U-Schenkels 6 sind vier Schlitze 9 vorgesehen, die Teil der im Nachfolgenden noch näher beschriebenen Anbringungsmittel sind. Die im eingebauten Zustand weitgehend vertikal verlaufenden U-Schenkel 6, 8 können bei dem Einfedern der Vorderradgabel in an sich bekannter Weise zwischen einer Gabelbrücke und einer Gabelkrone bewegt werden.

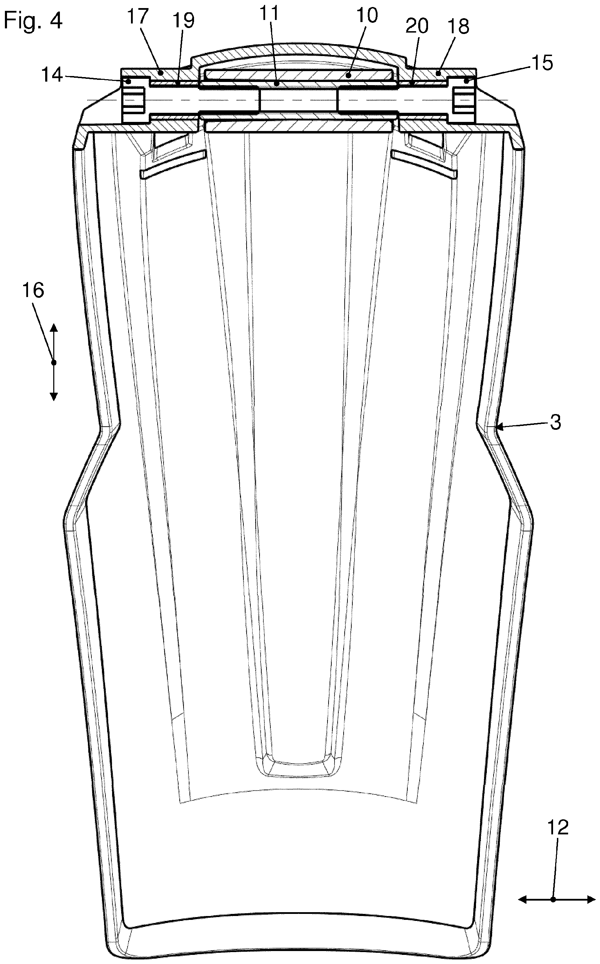

Am oberen Ende des hinteren U-Schenkels 8 ist eine hohlzylindrische Aufnahme 10 angeordnet, in die im zusammengebauten Zustand der Vorrichtung ein erstes Verbindungsteil 11 aufnimmt. Die Zylinderachse der hohlzylindrischen Aufnahme erstreckt sich in Querrichtung des Radschützers (siehe den Pfeil 12 in Fig. 4) und befindet sich hinsichtlich der Querrichtung 12 in einem mittleren Bereich (siehe Fig. 1 und Fig. 4). Die Innenseite der Aufnahme 10 ist mit einer Innensechskant-Struktur versehen, wobei gleichzeitig die Außenseite des ersten Verbindungsteils 11 mit einer Außensechskant-Struktur 13 versehen ist. Dadurch wird ein Verdrehen des ersten Verbindungsteils 11 in der Aufnahme 10 verhindert.

Es besteht alternativ die Möglichkeit, das erste Verbindungsteil 11 bei der Fertigung des ersten Spritzschutzteils 2 im Rahmen eines Kunststoffspritzvorgangs mit in das Spritzschutzteil 2 zu integrieren.

Das erste Verbindungsteil 11 ist als metallische Hülse ausgebildet und besteht vorzugsweise aus Aluminium. Alternativ besteht die Möglichkeit, dass das erste Verbindungsteil 11 beziehungsweise die Hülse aus einem mit Glasfasern verstärkten Kunststoff besteht. Die Hülse ist an beiden Stirnseiten offen und weist mindestens ein Innengewinde auf, so dass von beiden Seite eine Schraube 14, 15 in das erste Verbindungsteil 11 eingeschraubt werden kann. Die Stirnseiten des ersten Verbindungsteils 11 sind unstrukturiert.

Das zweite Spritzschutzteil 3 ist als Ganzes leicht torusförmig ausgebildet und langgestreckt. Es weist in seiner Längsrichtung (siehe den Pfeil 16 in Fig. 4) beziehungsweise im montierten Zustand in der Längsrichtung des Zweirads eine Länge von mehr als 10 cm, insbesondere eine Länge von mehr als 20 cm, beispielsweise eine Länge von etwa 30 cm auf.

Das zweite Spritzschutzteil 3 weist an seiner Vorderseite oben zwei hohlzylindrische Aufnahmen 17, 18 auf, die im zusammengebauten Zustand der Vorrichtung zwei zweite Verbindungsteile 19, 20 aufnehmen. Die Zylinderachsen der hohlzylindrischen Aufnahmen 17, 18 erstrecken sich in Querrichtung 12 des Radschützers (siehe Fig. 4) und befinden sich hinsichtlich der Querrichtung 12 jeweils in einem äußeren Bereich (siehe Fig. 1 und Fig. 4). Die Innenseiten der Aufnahmen 17, 18 sind mit einer Innensechskant-Struktur versehen, wobei gleichzeitig die Außenseiten der zweiten Verbindungsteile 19, 20 mit einer Außensechskant-Struktur 21, 22 versehen sind. Dadurch wird ein Verdrehen der zweiten Verbindungsteile 19, 20 in den Aufnahmen 17, 18 verhindert.

Es besteht alternativ die Möglichkeit, die zweiten Verbindungsteile 19, 20 bei der Fertigung des zweiten Spritzschutzteils 3 im Rahmen eines Kunststoffspritzvorgangs mit in das Spritzschutzteil 3 zu integrieren.

Die zweiten Verbindungsteile 19, 20 sind ebenfalls jeweils als metallische Hülse ausgebildet und bestehen vorzugsweise aus Aluminium. Alternativ besteht die Möglichkeit, dass auch die zweiten Verbindungsteile 19, 20 beziehungsweise die Hülsen aus einem mit Glasfasern verstärkten Kunststoff bestehen.

Die Hülsen sind an beiden Stirnseiten offen, so dass jeweils eine Schraube 14, 15 durch die beiden zweiten Verbindungsteile 19, 20 hindurch in das erste Verbindungsteil 11 eingeschraubt werden kann. Die im zusammengebauten Zustand dem ersten Verbindungsteil 11 zugewandten Stirnseiten der zweiten Verbindungsteile 19, 20 sind unstrukturiert.

Fig. 4 zeigt, dass die beiden zweiten Verbindungsteile 19, 20 in Querrichtung 12 so weit außen angeordnet sind, dass sie das erste Verbindungsteil 11 im zusammengebauten Zustand des Radschützers 1 zwischen sich aufnehmen können. Durch Anziehen der Schrauben 14, 15 werden die beiden zweiten Verbindungsteile 19, 20 in Querrichtung 12 von außen gegen die beiden Stirnseiten des ersten Verbindungsteils 11 gepresst. Dadurch wird das zweite Spritzschutzteil 3 an dem ersten Spritzschutzteil 2 festgelegt.

Nach dem Lösen der Schrauben 14, 15 kann das zweite Spritzschutzteil 3 relativ zu dem ersten Spritzschutzteil 2 verschwenkt werden. Aufgrund der unstrukturierten Oberflächen der einander zugewandten Stirnseiten des ersten und der zweiten Verbindungsteile 11, 19, 20 kann dieses Verschwenken stufenlos erfolgen. Dadurch kann das hintere Ende des vergleichsweise langen zweiten Spritzschutzteils 3 stufenlos angehoben und abgesenkt werden.

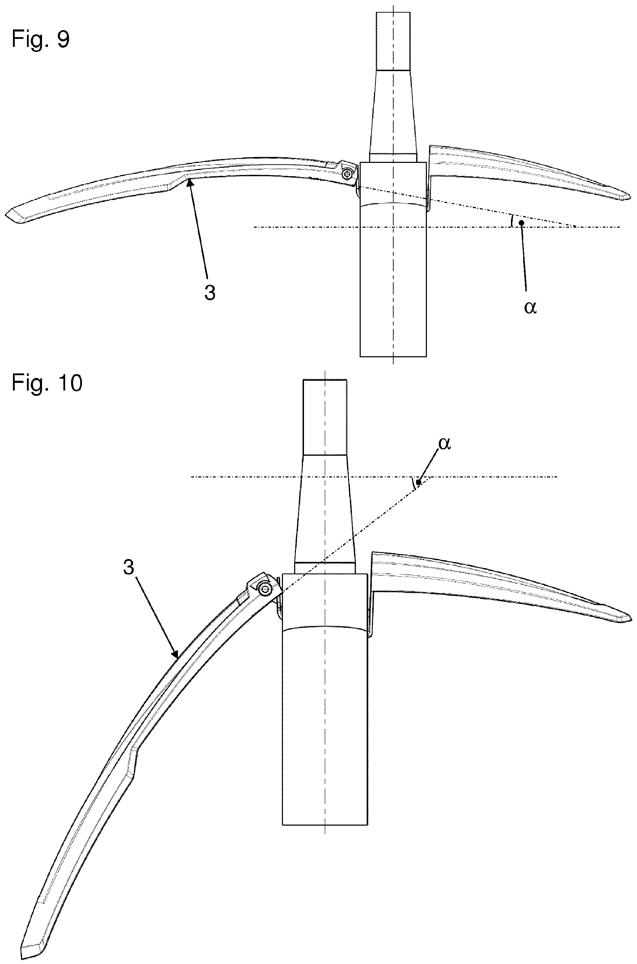

Fig. 9 zeigt eine Stellung, bei der die Längsrichtung 16 des zweiten Spritzschutzteils 3 einen relativ kleinen Winkel α mit der Horizontalen im am Zweirad angebauten Zustand einschließt. Fig. 10 zeigt eine demgegenüber stark verschwenkte Stellung des zweiten Spritzschutzteils 3, bei der die Längsrichtung 16 des zweiten Spritzschutzteils 3 einen relativ großen Winkel α mit der Horizontalen im am Zweirad angebauten Zustand einschließt.

Die Möglichkeit der stufenlosen Veränderung des Winkels α trägt dazu bei, die Geometrie des Radschützers an die Geometrie des Zweirades, insbesondere an die Form und die Lage der Gabelbrücken eines Fahrrades mit einfedernder Vorderradgabel anzupassen. Die stufenlose Verstellung ermöglicht die optimale Positionierung des hinteren Spritzschutzteils 3 zwischen dem Vorderreifen und dem Unterrohr des Fahrrads.

Es besteht die Möglichkeit, die Verbindungsteile 11, 19, 20 auf andere Weise an den Spritzschutzteilen 2, 3 anzuordnen. Beispielsweise können an dem zweiten Spritzschutzteil 3 in Querrichtung 12 mittig ein Verbindungsteil 11 und an dem ersten Spritzschutzteil 2 außen zwei Verbindungsteile 19, 20 angeordnet werden. Auch andere Verteilungen der mindestens zwei Verbindungsteile sind möglich.

Hinter den Aufnahmen 17, 18 sind an dem zweiten Spritzschutzteil 3 zwei als Haltemittel dienende Vorsprünge 23 vorgesehen, die Teil der im Nachfolgenden noch näher beschriebenen Anbringungsmittel für die Anbringung des Radschützers 1 am dem Zweirad sind. Hinter den Vorsprüngen 23 sind zwei Öffnungen 28 vorgesehen.

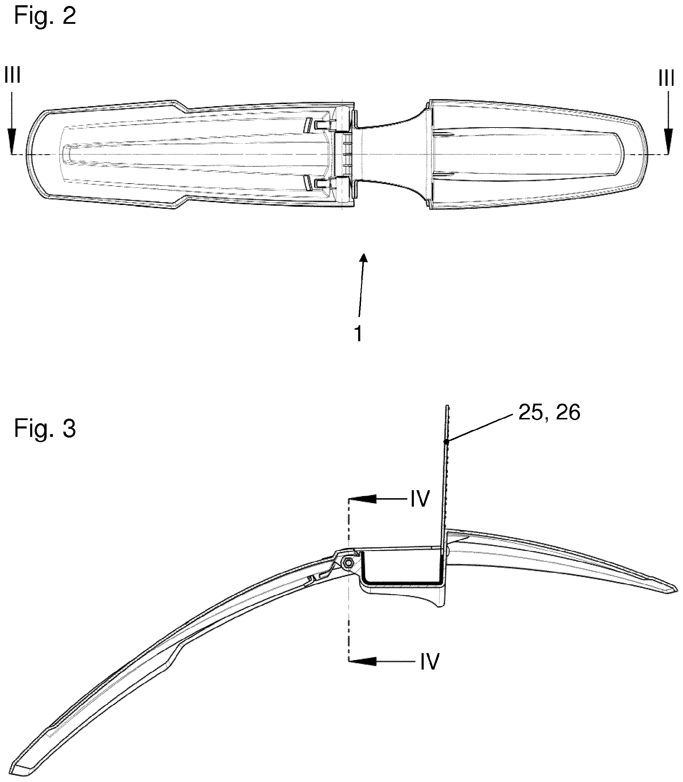

Der Radschützer 1 umfasst weiterhin ein U-förmiges Einlegeteil 24, das in den U-förmigen Abschnitt 5 des vorderen Spritzschutzteils 2 eingelegt werden kann (siehe Fig. 1 und Fig. 3). Das Einlegeteil 24 besteht aus einem elastischen Material wie beispielsweise Gummi. Durch die Elastizität des Materials können Vibrationen gedämpft werden.

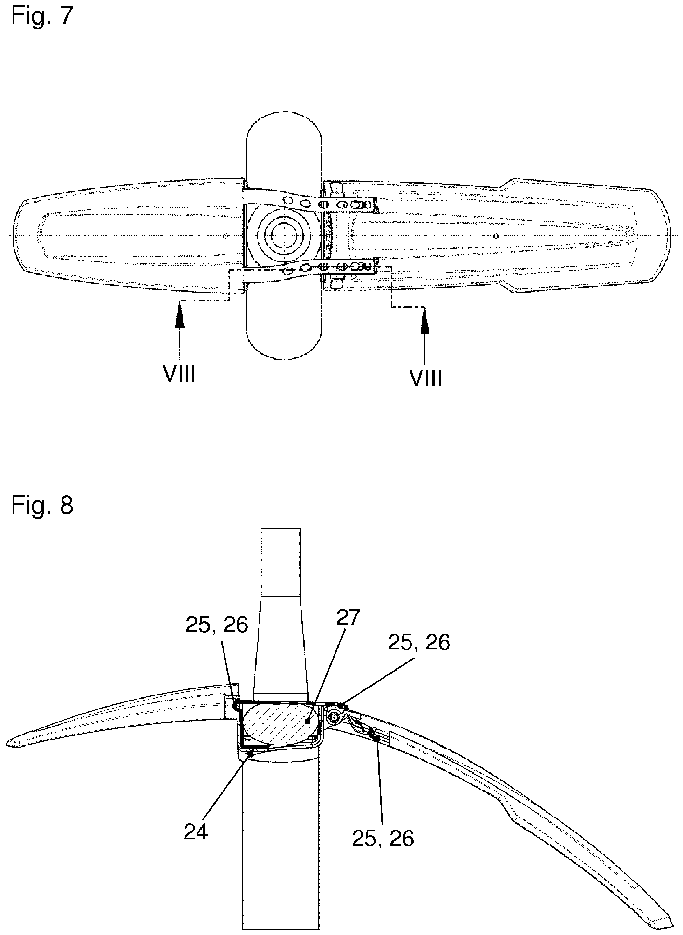

An dem vorderen Ende des Einlegeteils 24 sind zwei elastische Bänder 25, 26 angeordnet, die Teil der Anbringungsmittel für die Anbringung des Radschützers 1 am dem Zweirad sind. Die Bänder 25, 26 werden durch die Schlitze 9 geführt und über die Gabelkrone 27 hinweg gespannt (siehe Fig. 1, Fig. 5 und Fig. 6). Auf der anderen Seite der Gabelkrone 27 werden die Bänder 25, 26 an den Vorsprüngen 23 befestigt und gegebenenfalls aus optischen Gründen durch die hinter den Vorsprüngen 23 angeordneten Öffnungen 28 zur Unterseite des hinteren Spritzschutzteils 3 geführt (siehe dazu Fig. 8).

Die elastischen Bänder 25, 26 liegen auf diese Weise an der Oberseite der Gabelkrone 27 an, wohingegen die Basis des Einlegeteils 24 an der Unterseite der Gabelkrone 27 anliegt. Auf diese Weise wird eine vibrationsarme Anbringung des Radschützers 1 an der Vorderradgabel gewährleistet.

Das Einlegeteil 24 verhindert somit das Entstehen von Klappergeräuschen und kann auch Lackschäden an dem Rahmen des Fahrrads vermeiden.

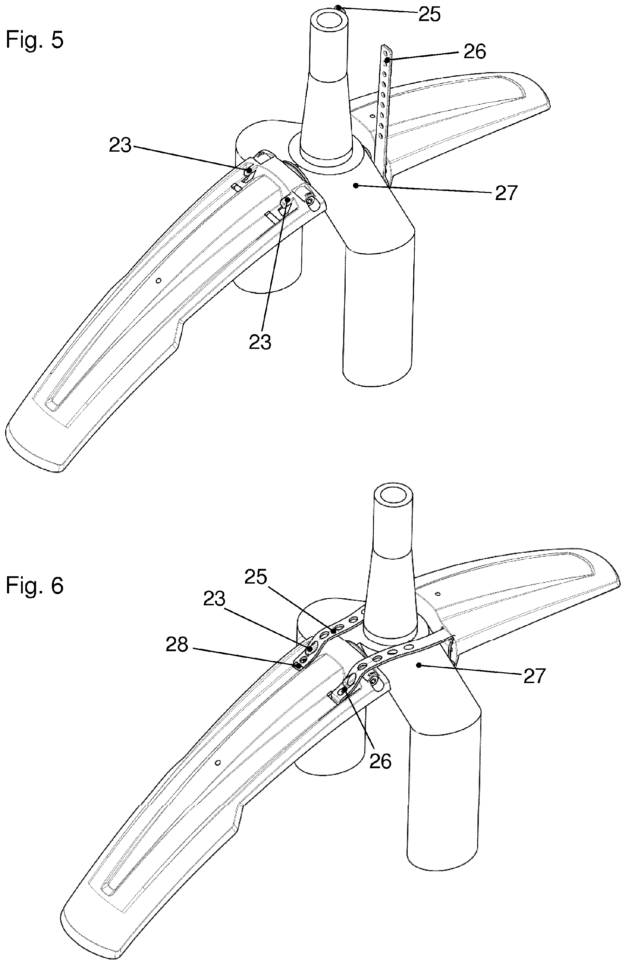

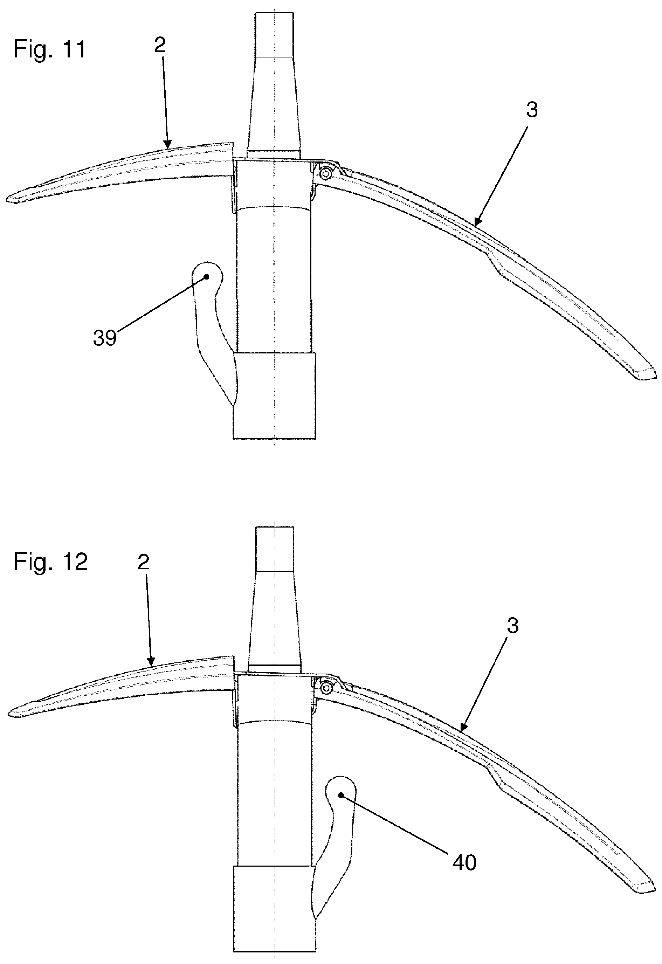

In den Fig. 5 bis Fig. 10 ist eine sogenannte Upside-Down-Federgabel abgebildet, die keine Gabelbrücke aufweist. In Fig. 11 ist eine einfedernde Vorderradgabel abgebildet, die eine vorne liegende Gabelbrücke 39 aufweist. Fig. 12 lässt sich eine einfedernde Vorderradgabel entnehmen, die eine hinten liegende Gabelbrücke 40 aufweist.

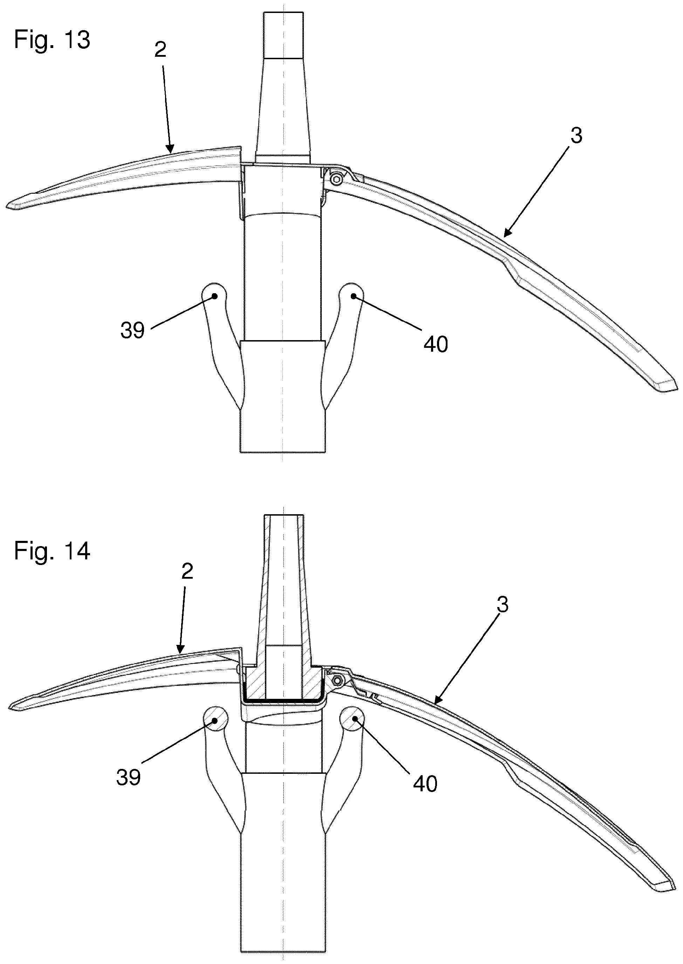

In Fig. 13 und Fig. 14 ist eine einfedernde Vorderradgabel abgebildet, die sowohl eine vordere, als auch eine hintere Gabelbrücke 39, 40 aufweist. Fig. 14 verdeutlicht, dass auch in einer eingefederten Stellung der Vorderradgabel die beiden Spritzschutzteile 2, 3 nicht mit den Gabelbrücken 39, 40 kollidieren. Ein entsprechend ausreichender Abstand von den Gabelbrücken 39, 40 wird durch den U-förmigen Abschnitt 5 des ersten Spritzschutzteils 2 gewährleistet, weil sich das erste Spritzschutzteil 2 von der Oberseite des vorderen U-Schenkels 6 nach vorne und das zweite Spritzschutzteil 3 von der Oberseite des hinteren U-Schenkels 8 nach hinten erstreckt.

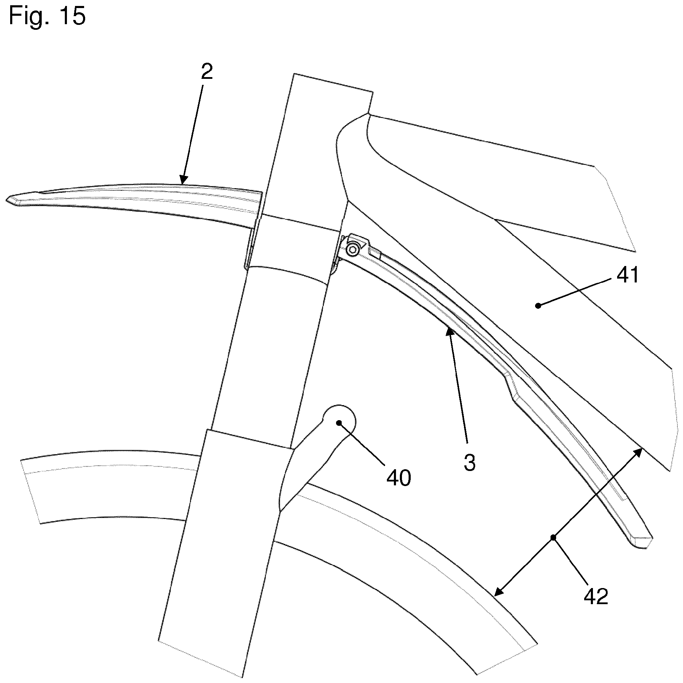

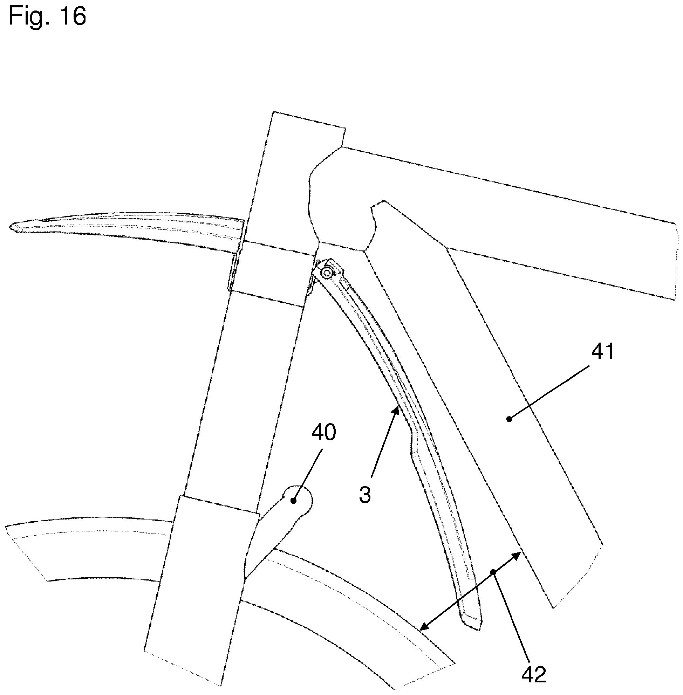

Fig. 15 und Fig. 16 verdeutlichen für zwei verschiedene Rahmen eines Fahrrads, dass ein erfindungsgemäßer Radschützer 1 durchaus an unterschiedliche Rahmengeometrien angepasst werden kann.

Der in Fig. 15 abgebildete Rahmen weist ein sich relativ flach nach hinten und unten erstreckendes Unterrohr 41 auf. Aufgrund des dadurch entstehenden großen Zwischenraums 42 zwischen dem Unterrohr 41 und dem Reifen 43 am hinteren Ende des zweiten Spritzschutzteils 3 kann das zweite Spritzschutzteil 3 unter einem relativ kleinen Winkel zur Horizontalen von der Vorderradgabel wegragen.

Der in Fig. 16 abgebildete Rahmen weist ein sich relativ steil nach hinten und unten erstreckendes Unterrohr 41 auf. Um den sich daraus ergebenden kleinen Zwischenraum 42 zwischen dem Unterrohr 41 und dem Reifen 43 optimal zu nutzen, können die Verbindungsmittel so verstellt werden, dass das hintere Spritzschutzteil 3 unter einem relativ großen Winkel zur Horizontalen von der Vorderradgabel wegragt.

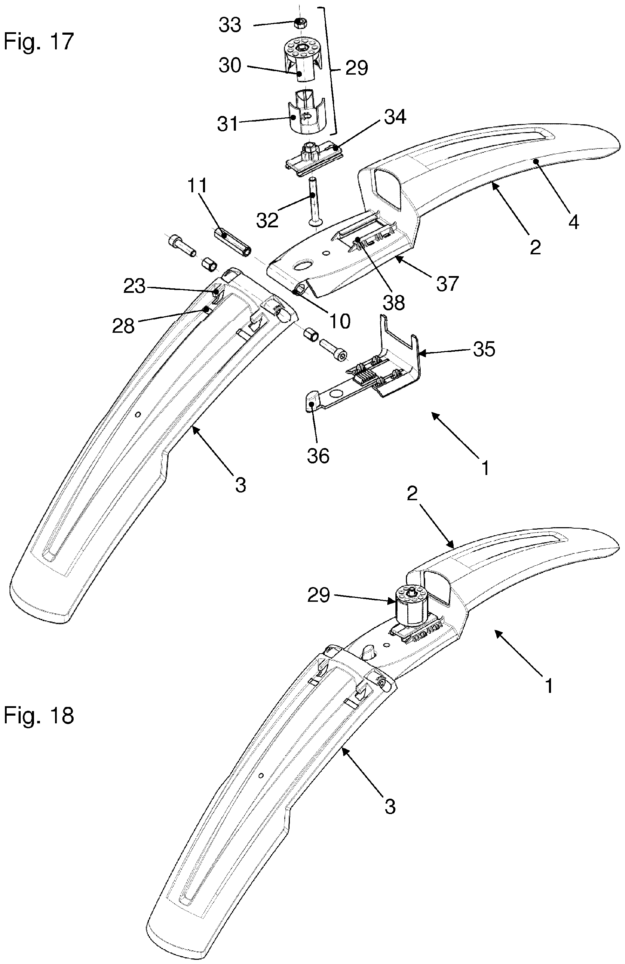

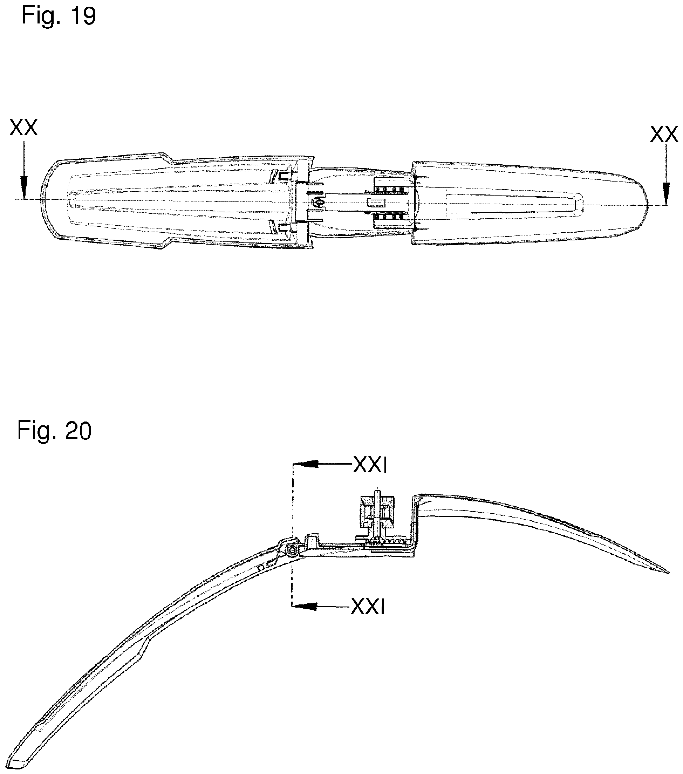

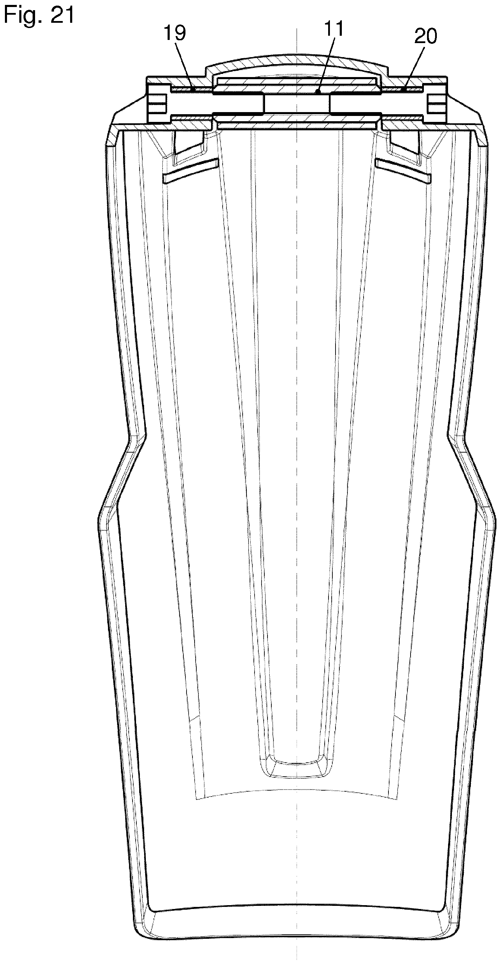

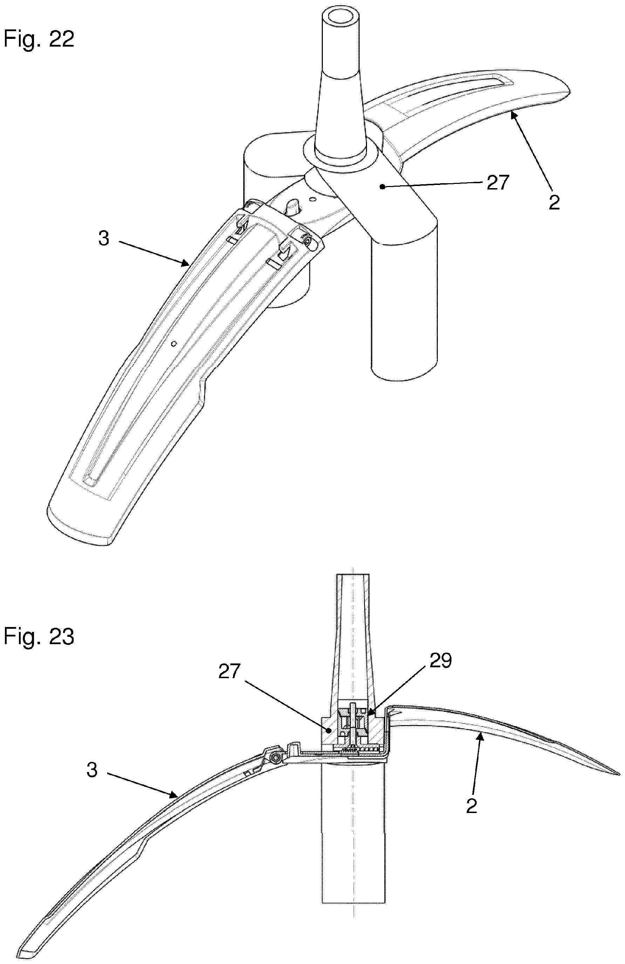

Die in den Fig. 17 bis Fig. 25 abgebildete zweite Ausführungsform des Radschützers 1 unterscheidet sich von der ersten Ausführungsform im Wesentlichen durch die Art der Anbringung an dem Zweirad. Die erste Ausführungsform wird mit flexiblen, die Gabelkrone umspannenden Bändern angebracht, wohingegen die zweite Ausführungsform in an sich bekannter Weise (siehe EP 1 435 323 A2) Klemmmittel 29 nutzt, die in das Innere einer Vorderradgabel eingebracht und aufgespreizt werden können.

Im abgebildeten Ausführungsbeispiel (siehe Fig. 17) sind zwei ineinander greifende Spreizelemente 30, 31 vorgesehen, die innen konische Flächen aufweisen, die bei einem Ineinander-Drücken der Spreizelemente 30, 31 ein Aufspreizen bewirken. Die Spreizelemente 30, 31 werden dabei durch eine Schraube 32 und eine Mutter 33 zusammengedrückt, wobei der Kopf der Schraube 15 an einem Anschlag anliegen kann, der an einem mit dem ersten Spritzschutzteil 2 verbindbaren Schiebeteil 34 ausgebildet ist. Ein Entriegelungsteil 35 weist einen Betätigungsknopf 36 auf, um das Schiebeteil 34 von dem ersten Spritzschutzteil 2 zu lösen.

Das erste Spritzschutzteil 2 weist ebenfalls wie bei der ersten Ausführungsform einen vorderen torusförmigen Abschnitt 4 auf. Anstelle des hinteren U-förmigen Abschnitts 5 umfasst das erste Spritzschutzteil 2 der zweiten Ausführungsform lediglich einen L-förmigen Abschnitt 37. An diesem Abschnitt 37 sind Anformungen 38 für die Aufnahme des Schiebeteils 34 vorgesehen (siehe Fig. 17). Die Aufnahme 10 für das erste Verbindungsteil 11 ist an dem hinteren Ende des L-förmigen Abschnitts 37 und damit tiefer als bei dem U-förmigen Abschnitt 5 der ersten Ausführungsform angeordnet.

Es besteht alternativ die Möglichkeit, den L-förmigen Abschnitt 37 getrennt von dem vorderen torusförmigen Abschnitt 4 auszubilden, so dass der L-förmige Abschnitt 37 als Zwischenstück dient, das mit dem ersten und dem zweiten Spritzschutzteil 2, 3 verbunden ist.

Das zweite Spritzschutzteil 3 ist bei der zweiten Ausführungsform genauso ausgebildet wir bei der ersten Ausführungsform. Es besteht jedoch die Möglichkeit, die Vorsprünge 23 und die Öffnungen 28 wegzulassen, weil keine elastischen Bänder verwendet werden.

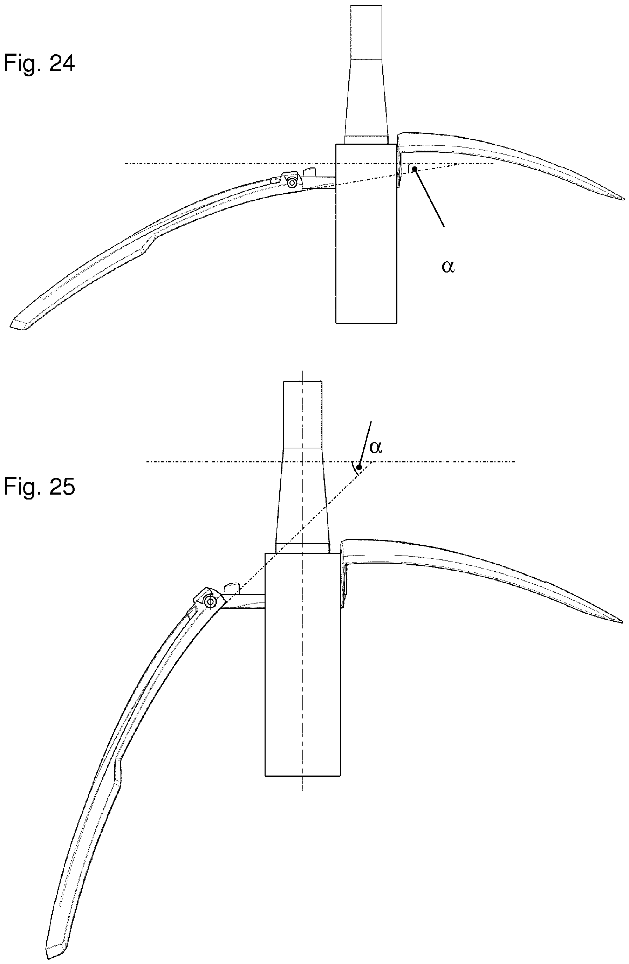

Fig. 24 und Fig. 25 verdeutlichen, dass auch bei der zweiten Ausführungsform des Radschützers 1 das hintere Ende des vergleichsweise langen zweiten Spritzschutzteils 3 stufenlos angehoben und abgesenkt werden kann.

Fig. 24 zeigt eine Stellung, bei der die Längsrichtung 16 des zweiten Spritzschutzteils 3 einen relativ kleinen Winkel α mit der Horizontalen im am Zweirad angebauten Zustand einschließt. Fig. 25 zeigt eine demgegenüber stark verschwenkte Stellung des zweiten Spritzschutzteils 3, bei der die Längsrichtung 16 des zweiten Spritzschutzteils 3 einen relativ großen Winkel α mit der Horizontalen im am Zweirad angebauten Zustand einschließt.

Auch bei der zweiten Ausführungsform kann durch die Möglichkeit der stufenlosen Veränderung des Winkels α die Geometrie des Radschützers an die Geometrie des Zweirades, insbesondere an die Form und die Lage der Gabelbrücken eines Fahrrades mit einfedernder Vorderradgabel angepasst werden. Die stufenlose Verstellung ermöglicht die optimale Positionierung des hinteren Spritzschutzteils 3 zwischen dem Vorderreifen und dem Unterrohr des Fahrrads.

## Patentansprüche

1. Radschützer (1) für das Vorderrad eines Zweirades, insbesondere für das Vorderrad eines Fahrrads mit einfedernder Vorderradgabel, umfassend
- ein erstes, im montierten Zustand vorderes Spritzschutzteil (2) und ein zweites, im montierten Zustand hinteres Spritzschutzteil (3), wobei die beiden Spritzschutzteile (2, 3) direkt miteinander verbunden sind, wobei das vordere Ende des ersten Spritzschutzteils (2) dem vorderen Ende des Radschützers (1) entspricht, wobei das hintere Ende des zweiten Spritzschutzteils (3) dem hinteren Ende des Radschützers (1) entspricht, und wobei jedes der Spritzschutzteile (2, 3) sich im montierten Zustand zumindest abschnittsweise in einer Längsrichtung (16) und/oder längs des Umfangs des Vorderrades erstreckt,
- Verbindungsmittel für die Verbindung der beiden Spritzschutzteile (2, 3) derart, dass die Richtung, in der sich das zweite Spritzschutzteil (3) im verbundenen Zustand von dem ersten Spritzschutzteil (2) wegerstreckt, veränderbar ist,
- Anbringungsmittel für die Anbringung der Spritzschutzteile (2, 3) an dem Zweirad,
wobei die Anbringungsmittel Klemmmittel (29) umfasssen, die zumindest teilweise in die Bohrung einer Gabelkrone (27) des Zweirades einbringbar und dort klemmend festlegbar sind, und/oder wobei die Anbringungsmittel Verbindungsmittel umfassen, die im angebrachten Zustand im Bereich der Gabelkrone (27), insbesondere oberhalb oder unterhalb oder über die Gabelkrone (27) hinweg, gespannt werden können,
**dadurch gekennzeichnet, dass** das zweite Spritzschutzteil (3) nicht segmentiert ist, wobei das zweite Spritzschutzteil (3) lediglich eine Verstellmöglichkeit der Richtung, in der sich das zweite Spritzschutzteil (3) im verbundenen Zustand von dem ersten Spritzschutzteil (2) wegerstreckt, aufweist, wobei diese Verstellmöglichkeit durch die Verbindungsmittel im in Einbaulage vorderen Bereich des zweiten Spritzschutzteils (3) realisiert ist und zur Positionierung des hinteren Endes des nicht segmentierten zweiten Spritzschutzteils (3) dient.

2. Radschützer (1) nach Anspruch 1, **dadurch gekennzeichnet, dass** die Verbindungsmittel derart gestaltet sind, dass die Richtung, in der sich das zweite Spritzschutzteil (3) im verbundenen Zustand von dem ersten Spritzschutzteil (2) wegerstreckt, stufenlos verstellbar ist.

3. Radschützer (1) nach einem der Ansprüche 1 oder 2, **dadurch gekennzeichnet, dass** die Verbindungsmittel derart gestaltet sind, dass die Verbindung eine kraftschlüssige Verbindung ist oder eine kraftschlüssige Verbindung umfasst.

4. Radschützer (1) nach einem der Ansprüche 1 bis 3, **dadurch gekennzeichnet, dass** die Verbindungsmittel mindestens zwei Verbindungsteile (11, 19, 20) umfassen, die aneinander pressbar sind, um die Verbindung zu realisieren oder zu der Verbindung beizutragen, insbesondere wobei die mindestens zwei Verbindungsteile (11, 19, 20) zumindest teilweise aus einem, vorzugsweise mit Glasfasern, verstärkten Kunststoff oder aus Metall, vorzugsweise aus Aluminium, bestehen oder einen, vorzugsweise mit Glasfasern, verstärkten Kunststoff oder Metall, vorzugsweise Aluminium, umfassen.

5. Radschützer (1) nach einem der Ansprüche 1 bis 4, **dadurch gekennzeichnet, dass** die Verbindungsmittel mindestens eine Hülse umfassen, durch die sich eine Schraube (14, 15) erstrecken kann, wobei insbesondere die mindestens eine Hülse zumindest teilweise aus einem, vorzugsweise mit Glasfasern, verstärkten Kunststoff oder aus Metall, vorzugsweise aus Aluminium, besteht oder einen, vorzugsweise mit Glasfasern, verstärkten Kunststoff oder Metall, vorzugsweise Aluminium, umfasst.

6. Radschützer (1) nach Anspruch 5, **dadurch gekennzeichnet, dass** die mindestens eine Hülse eines der Verbindungsteile (11, 19, 20) ist oder dass ein jedes der Verbindungsteile (11, 19, 20) als Hülse ausgebildet ist.

7. Radschützer (1) nach einem der Ansprüche 4 bis 6, **dadurch gekennzeichnet, dass** an dem zweiten Spritzschutzteil (3) mindestens eines der Verbindungsteile (19, 20), vorzugsweise mindestens eine der Hülsen, angeordnet ist, insbesondere dass an dem zweiten Spritzschutzteil (3) zwei Verbindungsteile (19, 20), vorzugsweise zwei Hülsen, angeordnet sind.

8. Radschützer (1) nach einem der Ansprüche 4 bis 7, **dadurch gekennzeichnet, dass** an dem ersten Spritzschutzteil (2) oder an dem Zwischenstück mindestens eines der Verbindungsteile (11), vorzugsweise mindestens eine der Hülsen, angeordnet ist, insbesondere dass an dem ersten Spritzschutzteil (2) oder an dem Zwischenstück zwei Verbindungsteile (11), vorzugsweise zwei Hülsen, angeordnet sind.

9. Radschützer (1) nach einem der Ansprüche 4 bis 8, **dadurch gekennzeichnet, dass** die mindestens zwei Verbindungsteile (11, 19, 20) im verbundenen Zustand in Querrichtung (12) des Radschützers (1) aneinander gepresst werden, wobei die aneinander gepressten Oberflächen der Verbindungsteile (11, 19, 20) insbesondere unstrukturiert sind.

10. Radschützer (1) nach Anspruch 9, **dadurch gekennzeichnet, dass** die mindestens zwei Verbindungsteile (11, 19, 20) an dem zweiten Spritzschutzteil (3) einerseits und an dem ersten Spritzschutzteil (2) oder an dem Zwischenstück andererseits in Querrichtung (12) des Radschützers (1) versetzt zueinander angeordnet sind.

11. Radschützer (1) nach einem der Ansprüche 9 oder 10, **dadurch gekennzeichnet, dass** an dem zweiten Spritzschutzteil (3) zwei Verbindungsteile (19, 20) in Querrichtung (12) des Radschützers (1) gegenüberliegend außen angeordnet sind und dass an dem ersten Spritzschutzteil (2) oder an dem Zwischenstück ein Verbindungsteil (11) in Querrichtung (12) des Radschützers (1) innen angeordnet ist, so dass im verbundenen Zustand die beiden Verbindungsteile (19, 20) des zweiten Spritzschutzteils (3) beidseitig von außen an dem Verbindungsteil (11) des ersten Spritzschutzteils (2) oder des Zwischenstücks anliegen.

12. Radschützer (1) nach einem der Ansprüche 9 oder 10, **dadurch gekennzeichnet, dass** an dem ersten Spritzschutzteil (2) oder an dem Zwischenstück zwei Verbindungsteile in Querrichtung (12) des Radschützers (1) gegenüberliegend außen angeordnet sind und dass an dem zweiten Spritzschutzteil (3) ein Verbindungsteil in Querrichtung (12) des Radschützers (1) innen angeordnet ist, so dass im verbundenen Zustand die beiden Verbindungsteile des ersten Spritzschutzteils (2) oder des Zwischenstücks beidseitig von außen an dem Verbindungsteil des zweiten Spritzschutzteils (3) anliegen.

13. Radschützer (1) nach einem der Ansprüche 6 bis 12, **dadurch gekennzeichnet, dass** mindestens eine Schraube (14, 15) im verbundenen Zustand durch ein in Querrichtung (12) des Radschützers (1) außen angeordnetes Verbindungsteil (19, 20), das vorzugsweise als Hülse ausgebildet ist, in ein in Querrichtung (12) des Radschützers (1) innen angeordnetes Verbindungsteil (11), das vorzugsweise als Hülse, insbesondere als Gewindehülse, ausgebildet ist, hineinragt.

14. Radschützer (1) nach einem der Ansprüche 4 bis 13, **dadurch gekennzeichnet, dass** die mindestens zwei Verbindungsteile (11, 19, 20) in mindestens eine Aufnahme (17, 18) an dem zweiten Spritzschutzteil (3) beziehungsweise mindestens eine Aufnahme (10) an dem ersten Spritzschutzteil (2) oder an dem Zwischenstück eingebracht sind, wobei insbesondere die Verbindungsteile (11, 19, 20) äußere Strukturierungen (13, 21, 22) wie eine Sechskantform aufweisen, um ein Verdrehen in den Aufnahmen (10, 17, 18) zu verhindern.

## Claims

1. Mudguard (1) for the front wheel of a two-wheeled vehicle, in particular for the front wheel of a bicycle with a resilient front fork, comprising
- a first splashguard part (2), at the front in the assembled state, and a second splashguard part (3), at the rear in the assembled state, wherein the two splashguard parts (2, 3) are directly connected to one another, wherein the front end of the first splashguard part (2) corresponds to the front end of the mudguard (1), wherein the rear end of the second splashguard part (3) corresponds to the rear end of the mudguard (1), and wherein each of the splashguard parts (2, 3) extends at least in sections in a longitudinal direction (16) and/or along the circumference of the front wheel in the assembled state,
- connection means for connecting the two splashguard parts (2, 3) such that the direction, in which the second splashguard part (3), in the connected state, extends away from the first splashguard part (2), can be changed,
- attachment means for attaching the splashguard parts (2, 3) to the two-wheeled vehicle,
wherein the attachment means comprise clamping means (29) which can be at least partially inserted into the bore of a fork crown (27) of the two-wheeled vehicle and can be fixed there by clamping, and/or wherein the attachment means comprise connection means which, in the attached state in the region of the fork crown (27), in particular above or below or over the fork crown (27), can be tensioned,
**characterised in that** the second splashguard part (3) is not segmented, wherein the second splashguard part (3) only has an adjustment option for the direction in which the second splashguard part (3) extends away from the first splashguard part (2) in the connected state, wherein this adjustment possibility is realised by the connection means in the front area of the second splashguard part (3) in the installed position and serves to position the rear end of the non-segmented second splashguard part (3).

2. Mudguard (1) according to claim 1, **characterised in that** the connection means are designed such that the direction in which the second splashguard part (3) extends away from the first splashguard part (2) in the connected state is continuously adjustable.

3. Mudguard (1) according to any one of claims 1 or 2, **characterised in that** the connection means are designed such that the connection is a force-locked connection or comprises a force-locked connection.

4. Mudguard (1) according to any one of claims 1 to 3, **characterised in that** the connection means comprise at least two connecting parts (11, 19, 20) which can be pressed against one another in order to implement the connection or to contribute to the connection, in particular wherein the at least two connecting parts (11, 19, 20) at least partially consist of a reinforced plastic, reinforced preferably with glass fibres, or of metal, preferably aluminium, or comprise a reinforced plastic, reinforced preferably with glass fibres, or comprise metal, preferably aluminium.

5. Mudguard (1) according to any one of claims 1 to 4, **characterised in that** the connection means comprise at least one sleeve through which a screw (14, 15) can extend, wherein in particular the at least one sleeve consists at least partially of a reinforced plastic, reinforced preferably with glass fibres, or of metal, preferably aluminium, or comprises a reinforced plastic, reinforced preferably with glass fibres, or comprises metal, preferably aluminium.

6. Mudguard (1) according to claim 5, **characterised in that** the at least one sleeve is one of the connecting parts (11, 19, 20) or **in that** each of the connecting parts (11, 19, 20) is designed as a sleeve.

7. Mudguard (1) according to any one of claims 4 to 6, **characterised in that** at least one of the connecting parts (19, 20), preferably at least one of the sleeves, is arranged on the second splashguard part (3), in particular **in that** two connecting parts (19, 20), preferably two sleeves, are arranged on the second splashguard part (3).

8. Mudguard (1) according to any one of claims 4 to 7, **characterised in that** at least one of the connecting parts (11), preferably at least one of the sleeves, is arranged on the first splashguard part (2) or on the intermediate piece, in particular **in that** on the first splashguard part (2) or on the intermediate piece two connecting parts (11), preferably two sleeves, are arranged.

9. Mudguard (1) according to any one of claims 4 to 8, **characterised in that** the at least two connecting parts (11, 19, 20) are pressed against one another in the connected state in the transverse direction (12) of the mudguard (1), wherein the surfaces of the connecting parts (11, 19, 20) pressed against one another are in particular unstructured.

10. Mudguard (1) according to claim 9, **characterised in that** the at least two connecting parts (11, 19, 20) are arranged on the second splashguard part (3) on the one hand and on the first splashguard part (2) or on the intermediate piece on the other hand, offset to each other in the transverse direction (12) of the mudguard (1).

11. Mudguard (1) according to any one of claims 9 or 10, **characterised in that** on the second splashguard part (3) two connecting parts (19, 20) are arranged opposite on the outside in the transverse direction (12) of the mudguard (1) and **in that** on the first splashguard part (2) or on the intermediate piece a connecting part (11) is arranged on the inside in the transverse direction (12) of the mudguard (1), so that in the connected state the two connecting parts (19, 20) of the second splashguard part (3) rest on both sides from the outside on the connecting part (11) of the first splashguard part (2) or the intermediate piece.

12. Mudguard (1) according to any one of claims 9 or 10, **characterised in that** on the first splashguard part (2) or on the intermediate piece, two connecting parts are arranged opposite on the outside in the transverse direction (12) of the mudguard (1) and **in that** on the second splashguard part (3) a connecting part is arranged in the transverse direction (12) of the mudguard (1) on the inside, so that in the connected state the two connecting parts of the first splashguard part (2) or the intermediate piece rest on both sides from the outside on the connecting part of the second splashguard part (3).

13. Mudguard (1) according to any one of claims 6 to 12, **characterised in that** at least one screw (14, 15) projects in the connected state through a connecting part (19, 20), which is arranged on the outside in the transverse direction (12) of the wheel guard (1) and is preferably designed as a sleeve, and said screw projects into a connecting part (11), which is arranged on the inside in the transverse direction (12) of the mudguard (1) and is preferably designed as a sleeve, in particular as a threaded sleeve.

14. Mudguard (1) according to any one of claims 4 to 13, **characterised in that** the at least two connecting parts (11, 19, 20) are introduced into at least one receptacle (17, 18) on the second splashguard part (3) or at least one receptacle (10) on the first splashguard part (2) or on the intermediate piece, wherein in particular the connecting parts (11, 19, 20) have outer structures (13, 21, 22) formed like a hexagon in order to prevent twisting in the receptacles (10, 17, 18).

## Revendications

1. Garde-boue (1) pour la roue avant d'un deux-roues,
en particulier pour la roue avant d'une bicyclette avec une fourche avant rétractable, comprenant
- une première pièce de protection anti-projections avant (2) à l'état monté et une deuxième pièce de protection anti-projections arrière (3) à l'état monté, les deux pièces de protection anti-projections (2, 3) étant directement connectées l'une à l'autre, l'extrémité avant de la première pièce de protection anti-projections (2) correspondant à l'extrémité avant du garde-boue (1), l'extrémité arrière de la deuxième pièce de protection anti-projections (3) correspondant à l'extrémité arrière du garde-boue (1), et chacune des pièces de protection anti-projections (2, 3) s'étendant à l'état monté au moins par sections dans une direction longitudinale (16) et/ou le long de la circonférence de la roue avant,
- des moyens de connexion pour connecter les deux pièces de protection anti-projections (2, 3) de sorte que la direction dans laquelle la deuxième pièce de protection anti-projections (3) s'éloigne de la première pièce de protection anti-projections (2) à l'état connecté puisse être modifiée,
- des moyens de fixation pour attacher les pièces de protection anti-projections (2, 3) au deux-roues,
les moyens de fixation comprenant des moyens de serrage (29) qui peuvent être insérés au moins partiellement dans l'alésage d'une couronne de fourche (27) du deux-roues et peuvent y être fixés par serrage, et/ou les moyens de fixation comprenant des moyens de fixation qui peuvent être tendus à l'état fixé dans la zone de la couronne de fourche (27), en particulier au-dessus ou en dessous ou au-delà de la couronne de fourche (27),
**caractérisé en ce que** la deuxième pièce de protection anti-projections (3) n'est pas segmentée, la deuxième pièce de protection anti-projections (3) n'ayant qu'une possibilité de réglage de la direction dans laquelle la deuxième pièce de protection anti-projections (3) s'éloigne de la première pièce de protection anti-projections (2) à l'état connecté, cette possibilité de réglage étant réalisée par les moyens de connexion dans la zone avant de la deuxième pièce de protection anti-projections (3) en position de montage et servant à positionner l'extrémité arrière de la deuxième pièce de protection anti-projections (3) non segmentée.

2. Garde-boue (1) selon la revendication 1, **caractérisé en ce que** les moyens de connexion sont conçus de sorte que la direction dans laquelle la deuxième pièce de protection anti-projections (3) s'étend à l'écart de la première pièce de protection anti-projections (2) à l'état connecté est réglable en continu.

3. Garde-boue (1) selon l'une quelconque des revendications 1 ou 2, **caractérisé en ce que** les moyens de connexion sont conçus de sorte que la connexion est une connexion par complémentarité de force ou comprend une connexion par complémentarité de force.

4. Garde-boue (1) selon l'une quelconque des revendications 1 à 3, **caractérisé en ce que** les moyens de connexion comprennent au moins deux pièces de connexion (11, 19, 20) qui peuvent être pressées l'une contre l'autre afin de réaliser la connexion ou de contribuer à la connexion, en particulier dans lequel les au moins deux pièces de connexion (11, 19, 20) sont au moins partiellement en plastique renforcé, de préférence par des fibres de verre, ou en métal, de préférence en aluminium, ou comprennent un plastique renforcé, de préférence par des fibres de verre, ou un métal, de préférence en aluminium.

5. Garde-boue (1) selon l'une quelconque des revendications 1 à 4, **caractérisé en ce que** les moyens de connexion comprennent au moins une douille à travers laquelle une vis (14, 15) peut s'étendre, en particulier l'au moins une douille étant au moins partiellement en plastique renforcé, de préférence par des fibres de verre, ou en métal, de préférence en aluminium, ou comprenant un plastique renforcé, de préférence par des fibres de verre, ou un métal, de préférence en aluminium.

6. Garde-boue (1) selon la revendication 5, **caractérisé en ce que** l'au moins une douille est l'une des pièces de connexion (11, 19, 20) ou **en ce que** chacune des pièces de connexion (11, 19, 20) est conçue en tant que douille.

7. Garde-boue (1) selon l'une quelconque des revendications 4 à 6, **caractérisé en ce qu'**au moins une des pièces de connexion (19, 20), de préférence au moins une des douilles, est disposée sur la deuxième pièce de protection anti-projections (3), en particulier que deux pièces de connexion (19, 20), de préférence deux douilles, sont disposées sur la deuxième pièce de protection anti-projections (3).

8. Garde-boue (1) selon l'une quelconque des revendications 4 à 7, **caractérisé en ce qu'**au moins une des pièces de connexion (11), de préférence au moins une des douilles, est disposée sur la première pièce de protection anti-projections (2) ou sur la pièce intermédiaire, en particulier que deux pièces de connexion (11), de préférence deux douilles, sont disposées sur la première pièce de protection anti-projections (2) ou sur la pièce intermédiaire.

9. Garde-boue (1) selon l'une quelconque des revendications 4 à 8, **caractérisé en ce que** les au moins deux pièces de connexion (11, 19, 20) sont pressées l'une contre l'autre à l'état connecté dans la direction transversale (12) du garde-boue (1), les surfaces des pièces de connexion (11, 19, 20) pressées l'une contre l'autre étant en particulier non structurées.

10. Garde-boue (1) selon la revendication 9, **caractérisé en ce que** les au moins deux pièces de connexion (11, 19, 20) sur la deuxième pièce de protection anti-projections (3) d'une part et sur la première pièce de protection anti-projections (2) ou sur la pièce intermédiaire d'autre part sont disposées décalées l'une par rapport à l'autre dans la direction transversale (12) du garde-boue (1).

11. Garde-boue (1) selon l'une quelconque des revendications 9 ou 10, **caractérisé en ce que** deux pièces de connexion (19, 20) sont disposées en vis-à-vis à l'extérieur dans la direction transversale (12) du garde-boue (1) sur la deuxième pièce de protection anti-projections (3) et **en ce qu'**une pièce de connexion (11) est disposée à l'intérieur dans la direction transversale (12) du garde-boue (1) sur la première pièce de protection anti-projections (2) ou sur la pièce intermédiaire, de sorte que, à l'état connecté, les deux pièces de connexion (19, 20) de la deuxième pièce de protection anti-projections (3) reposent de part et d'autre, depuis l'extérieur, sur la pièce de connexion (11) de la première pièce de protection anti-projections (2) ou contre la pièce intermédiaire.

12. Garde-boue (1) selon l'une quelconque des revendications 9 ou 10, **caractérisé en ce que** deux pièces de connexion sont disposées en vis-à-vis à l'extérieur dans la direction transversale (12) du garde-boue (1) sur la première pièce de protection anti-projections (2) ou sur la pièce intermédiaire, et **en ce qu'**une pièce de connexion est disposée à l'intérieur dans la direction transversale (12) du garde-boue (1) sur la deuxième pièce de protection anti-projections (3) de sorte que, à l'état connecté, les deux pièces de connexion de la première pièce de protection anti-projections (2) ou de la pièce intermédiaire reposent sur la pièce de connexion de la deuxième pièce de protection anti-projections (3) de part et d'autre, depuis l'extérieur.

13. Garde-boue (1) selon l'une quelconque des revendications 6 à 12, **caractérisé en ce qu'**au moins une vis (14, 15) à l'état connecté pénètre à travers une pièce de connexion (19, 20) disposée à l'extérieur dans la direction transversale (12) du garde-boue (1), qui est de préférence conçue en tant que douille, dans une pièce de connexion (11) disposée à l'intérieur dans la direction transversale (12) du garde-boue (1), qui est de préférence conçue en tant que douille, en particulier en tant que douille filetée.

14. Garde-boue (1) selon l'une quelconque des revendications 4 à 13, **caractérisé en ce que** les au moins deux pièces de connexion (11, 19, 20) sont insérées dans au moins un logement (17, 18) sur la deuxième pièce de protection anti-projections (3) ou au moins un logement (10) sur la première pièce de protection anti-projections (2) ou sur la pièce intermédiaire, les pièces de connexion (11, 19, 20) présentant en particulier des structurations extérieures (13, 21, 22) telles qu'une forme hexagonale afin d'empêcher une torsion dans les logements (10, 17, 18).
